# EUROPÄISCHE PATENTSCHRIFT

(11) **EP 0 825 426 B1**
(45) Veröffentlichungstag und Bekanntmachung des Hinweises auf die Patenterteilung: **07.01.2004**
(21) Anmeldenummer: 96890138.9
(22) Anmeldetag: 22.08.1996
(51) Int. Cl.: G01L 5/10, B65H 23/192, B65H 23/04, D05B 35/06

(54) **Vorrichtung zum zugspannungsgeregelten Zuführen eines elastischen Bandes od. dgl. zu einer Arbeitsmaschine, insbesondere Nähmaschine**
Device for tension controlled feeding of an elastic band or the like to a machine, in particular a sewing machine
Dispositif pour alimenter une bande élastique ou des articles similaires à une machine productrice, en particulier une machine à coudre, en règlant la tension

(43) Veröffentlichungstag der Anmeldung: 25.02.1998
(73) Patentinhaber: Nähtechnik Sahl Ges.m.b.H., 4501 Neuhofen (AT)
(72) Erfinder: Sahl, Johannes, 4501 Neuhofen a.d. Krems (AT)
(74) Vertreter: Hübscher, Gerhard, Dipl.-Ing.

(56) Entgegenhaltungen:
- EP-A- 0 582 947
- CH-A- 495 271
- DE-A- 2 032 041
- DE-A- 2 724 335
- DE-A- 3 425 939
- DE-A- 3 506 698
- DE-C- 3 716 148
- DE-U- 9 315 076
- GB-A- 803 811
- GB-A- 868 725
- US-A- 3 031 152
- US-A- 3 910 522
- US-A- 4 699 606

## Beschreibung

Die Erfindung bezieht sich auf eine Vorrichtung zum zugspannungsgeregelten Zuführen eines elastischen Bandes zu einer Arbeitsmaschine, insbesondere Nähmaschine, mit einem Schrittmotor für den Bandvorschub und mit einer Umlenkrolle für die Zugspannungsmessung des Bandes, wobei die Reaktionskräfte der Umlenkrollenlagerung mittels eines elektromechanischen Wandlers erfaßt und als Regelgröße zur Schrittmotorsteuerung einer Steuerungseinrichtung einlesbar sind.

Beim Verarbeiten elastischen Bandmaterials, beispielsweise beim Aufnähen von Gummibändern auf ein Stoffstück zur Bekleidungsherstellung, ist auf eine gleichmäßige Zugspannung des zugeführten Bandes zu achten, um ein einwandfreies Werkstück gleichbleibender Qualität zu erreichen und nicht beim Verarbeiten des Bandes aufgrund auftretender Spannungsunterschiede ungleiche Dehnungen des Bandes, ungewollte Kräuselungen des mit dem Band versehenen Werkstückes in Kauf nehmen zu müssen. Wie die AT B 398 988 oder die DE-C 34 25 939 zeigen, gibt es dazu bereits Spannungseinstellvorrichtungen, die über einen ansteuerbaren Antriebsmotor für den Bandvorschub die im Band auftretende Zugspannung regelnd überwachen, indem die Lagerreaktion einer bandbelasteten Umlenkrolle als Regelgröße herangezogen wird. Die Umlenkrolle lagert dabei auf einer biegbaren Halteeinrichtung eines elektromechanischen Wandlers und die Steuerung des Schrittmotors erfolgt in Abhängigkeit von den über einen Dehnungsmesser erfaßbaren bandzugbedingten Biegedehnungen der Halteeinrichtung. Es kommt zu einer recht aufwendigen Wandlerkonstruktion, da eine auch auf geringere Lagerreaktionskräfte ansprechende Biegefähigkeit der Halteeinrichtung eine besondere Gestaltung, vorzugsweise in Form eines Gelenkvierecks, erfordert, doch bleibt bis zu einer meßbaren Verbiegung eine unerwünscht große Ansprechtoleranz, die keine feinfühlige Steuerung erlaubt. Außerdem ist der Wandler zusätzlich noch mit einem entsprechenden Platzbedarf verbunden, der zu Schwierigkeiten bei der Anordnung der bekannten Spannungseinstellvorrichtungen im Bereich der Arbeitsmaschinen führt. Weiters ist aus der US 3 910 522 bekannt, die Zugspannungen eines Bandes anhand der Bewegungen eines Trägers zu messen, der proportional zur Lage einer auf einem Schlitten geführten Bandumlenkrolle ausschwenkt. Um eine hohe Empfindlichkeit zu gewährleisten, weist der Wandler auf nachteilige Weise einen hohen Bauaufwand sowie große Abmessungen auf. Die Baugröße des Wandlers kann auch durch die DE 35 06 698 nicht verringert werden, in der die Durchbiegung eines Biegebalkens mit einem Permanentmagneten und zugehörigen Hall-Sensor gemessen wird, da gegen das Widerstandsmoment des Biegebalkens eine große Durchbiegung möglich sein muß.

Der Erfindung liegt daher die Aufgabe zugrunde, diese Mängel zu beseitigen und eine Vorrichtung der eingangs geschilderten Art zu schaffen, die sich durch ihre Empfindlichkeit und Rege!ungsgenauigkeit bei vergleichsweise geringem Bauaufwand und Platzbedarf auszeichnet.

Die Erfindung löst diese Aufgabe dadurch, daß die Umlenkrolle am Kraftarm eines beweglich abgestützten Hebels lagert, dessen Lastarm auf einen den Wandler bildenden Drucksensor einwirkt, und daß zur Steuerung des Schrittmotors in Abhängigkeit von den auftretenden Druckänderungen die Steuerungseinrichtung mit einem die Drucksensorsignale verarbeitenden Rechner in Verbindung steht. Der Hebel zur Lagerung der Umlenkrolle ist ein sehr einfaches Konstruktionselement, das entsprechend den Hebeigesetzen eine Übersetzung der Reaktionskräfte aus der Umlenkrollenlagerung mit sich bringt und über den Drucksensor auch feinste Änderungen dieser Reaktionskräfte zu erfassen erlaubt. Der Drucksensor, beispielsweise ein piezoelektrisches Element, ist ein in der Technik gängiges, oft bewährtes Produkt und liefert auf rationellste Weise exakte, druckabhängige Signale, die über die Steuerungseinrichtung eine äußerst feinfühlige Steuerung des Schrittmotors für den Bandvorschub ermöglichen. Die Steuerungseinrichtung selbst weist einen Rechner der, vorzugsweise einen Mikroprozessor auf, der unabhängig von speziellen Bereichsangaben der auftretenden Spannungen arbeitet und bei der Steuerung auch andere Einflußgrößen, wie Bearbeitungsgeschwindigkeit, Bandriß, Start- und Stopbedingungen u. dgl. unmittelbar zu berücksichtigen gestattet.

Nach einem anderen Ausführungsbeispiel ist die Erfindung dadurch gekennzeichnet, daß die Umlenkrolle auf einem beweglich abgestützten, entgegengesetzt zur Reaktionskraftbelastung feder- oder gewichtsbelasteten Träger lagert, dem ein den Wandler bildender, auf eine Trägerbewegung ansprechender Weggeber zugeordnet ist, und daß zur Steuerung des Schrittmotors in Abhängigkeit von den auftretenden Trägerbewegungen die Steuerungseinrichtung mit einem die Weggebersignale verarbeitenden Rechner in Verbindung steht. Dabei kann der Träger vorzugsweise aus einem um eine Parallelachse zur Umlenkrollenachse schwenkbar gelagerter Meßhebel oder aus einem entlang einer zumindest annähernd in Reaktionskraftrichtung verlaufenden Führungsschiene verschiebbar geführten Meßschlitten bestehen. Der Träger zur Lagerung der Umlenkrolle ist ein sehr einfaches Konstruktionselement, der entsprechend der Abstimmung der Feder- oder Gewichtsbelastung auf die Reaktionskräfte aus der Umlenkrollenlagerung auch feinste Änderungen dieser Reaktionskräfte durch genügend große Bewegungsschritte genau zu erfassen erlaubt und bei Verwendung eines Meßhebels auf Grund der Hebelgesetze sogar eine Übersetzung der Reaktionsbewegungen ermöglicht. Der Weggeber liefert auf rationellste Weise exakte Signale, die über die Steuerungseinrichtung eine äußerst feinfühlige Steuerung des Schrittmotors für den Bandvorschub gewährleisten. Die Steuerungseinrichtung selbst weist wiederum einen Rechner, vorzugsweise einen Mikroprozessor, auf, der bereichsunabhängig arbeitet und bei der Steuerung auch andere Einflußgrößen zu berücksichtigen gestattet.

Da die Umlenkrolle auf einem einfachen, schmal dimensionierten Träger gelagert sein kann und auch die Steuerungseinrichtungen und der Wandler nur wenig Platz in Anspruch nehmen, können die Steuerungseinrichtung, der Wandler und die Vorschubeinrichtung mit dem Schrittmotor, den zugehörenden Treib- und Umlenkrollen und den Lagerelementen in einem gemeinsamen Gehäuse untergebracht sein, so daß eine leicht und problemlos anzuordnende Baueinheit entsteht.

Als Weggeber eignen sich verschiedenste Einrichtungen, vom Schiebewiderstand zum Potentiometer bis zu berührungsfreien Echo- und Funkmessern, wobei sich wegen ihrer Einfachheit und platzsparenden Einbaumöglichkeit insbesondere Weggeber bewähren, die einen dem Träger zugeordneten Permanentmagneten und einen dem Gehäuse zugeordneten Hall-Sensor umfassen. Auch hat sich ein Dehnmeßstreifen bewährt, der zwischen Widerlagern des Trägers und des Gehäuses eingesetzt ist.

In der Zeichnung ist der Erfindungsgegenstand rein schematisch veranschaulicht, und zwar zeigen
- Fig. 1 und 2: eine erfindungsgemäße Vorrichtung in teilgeschnittener Seitenansicht bzw. Vorderansicht sowie
- Fig. 3: ein zugehöriges Blockschaltbild,
- Fig. 4 und 5: ein anderes Ausführungsbeispiel einer erfindungsgemäßen Vorrichtung in teilgeschnittener Seitenansicht bzw. Vorderansicht und
- Fig. 6: ein zugehöriges Blockschaltbild.

Eine Vorrichtung 1 zum zugspannungsgeregelten Zuführen eines elastischen Bandes B zu einer nicht weiter dargestellten Nähmaschine weist eine über einen Schrittmotor 2 antreibbare Treibrolle 3, die mit einer Andrückrolle 4 zusammenwirkt, Leiteinrichtungen 5 für die Bandführung sowie eine Umlenkrolle 6 für die Zugspannungsmessung des Bandes B auf. Die Steuerungseinrichtung 10, der Wandler und die Vorschubeinrichtung mit Schrittmotor 2, den zugehörenden Treib- und Umlenkrollen 3, 4, 5 und 6 und den Lagerelementen, sind auch hier in einem gemeinsamen Gehäuse 14 untergebracht und die Vorrichtung 1 als Baueinheit auf einem Träger 15 eines Maschinengestells der Nähmaschine untergebracht, so daß die Vorrichtung 1 als Baueinheit einfach und platzsparend auf einem Träger 15 eines nicht weiter dargestellten Maschinengestells der Nähmaschine montiert werden kann.

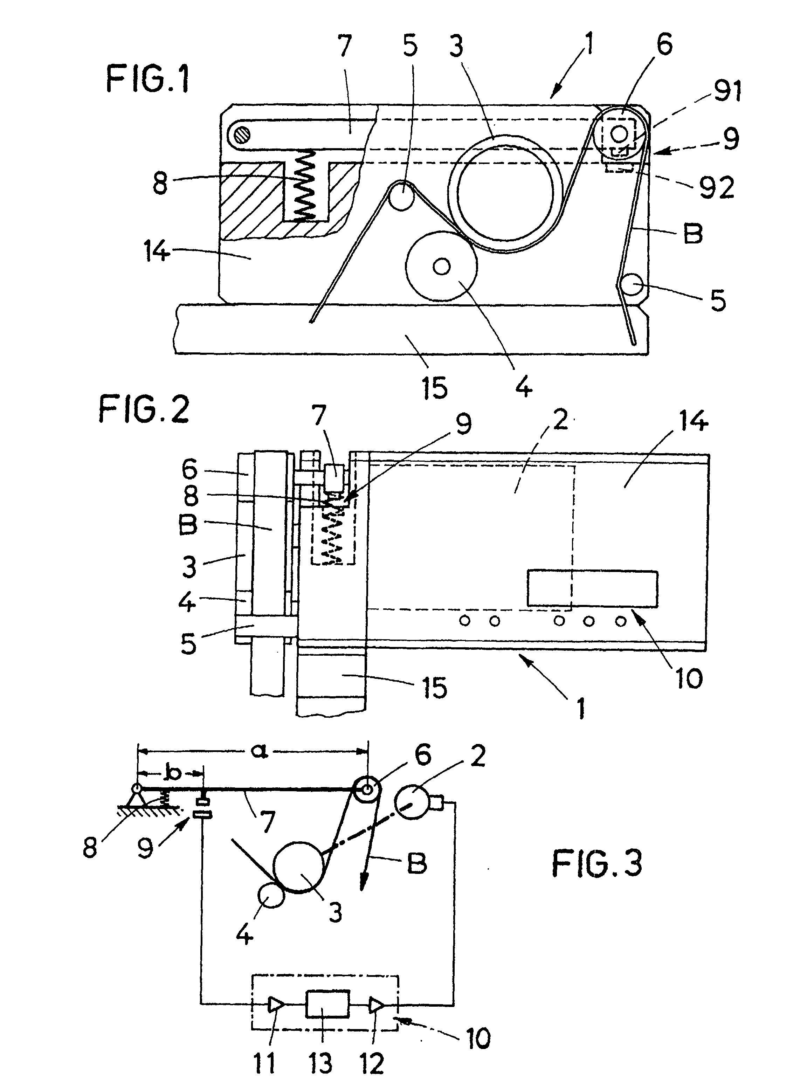

Gemäß dem Ausführungsbeispiel nach Fig. 1 bis 3 ist zur Zugspannungsmessung ein um eine Parallelachse zur Umlenkrollenachse schwenkbar gelagerten Meßhebel 7 als Träger für die Umlenkrolle 6 vorgesehen, der sich auf einer entgegengesetzt zur Lagerbelastung durch die Umlenkrolle 6 wirksamen Feder 8 abstützt. Über einen Weggeber 9, der einen dem Hebel zugeordneten Permanentmagneten 91 und einen dem Gehäuse zugeordneten Hall-Sensor 92 umfaßt, werden nun die vom Bandzug abhängigen Hebelauslenkungen als elektrische Signale in eine Steuerungseinrichtung 10 eingelesen, die den Schrittmotor 2 ansteuert. Die Steuerungseinrichtung 10 umfaßt neben einem Verstärker 11 zur Verstärkung des Eingangssignals und einem Verstärker 12 zur Verstärkung des Ausgangssignals einen Mikroprozessor 13, der die Eingangssignale entsprechend einem Steuerprogramm verarbeitet, wodurch der Schrittmotor 2 und damit der Bandvorschub in Abhängigkeit von den Schwenklagenänderungen des Meßhebels 7, also in Abhängigkeit vom jeweiligen Bandzug gesteuert wird und eine feinfühlige Regelung der Bandzuführung erfolgt.

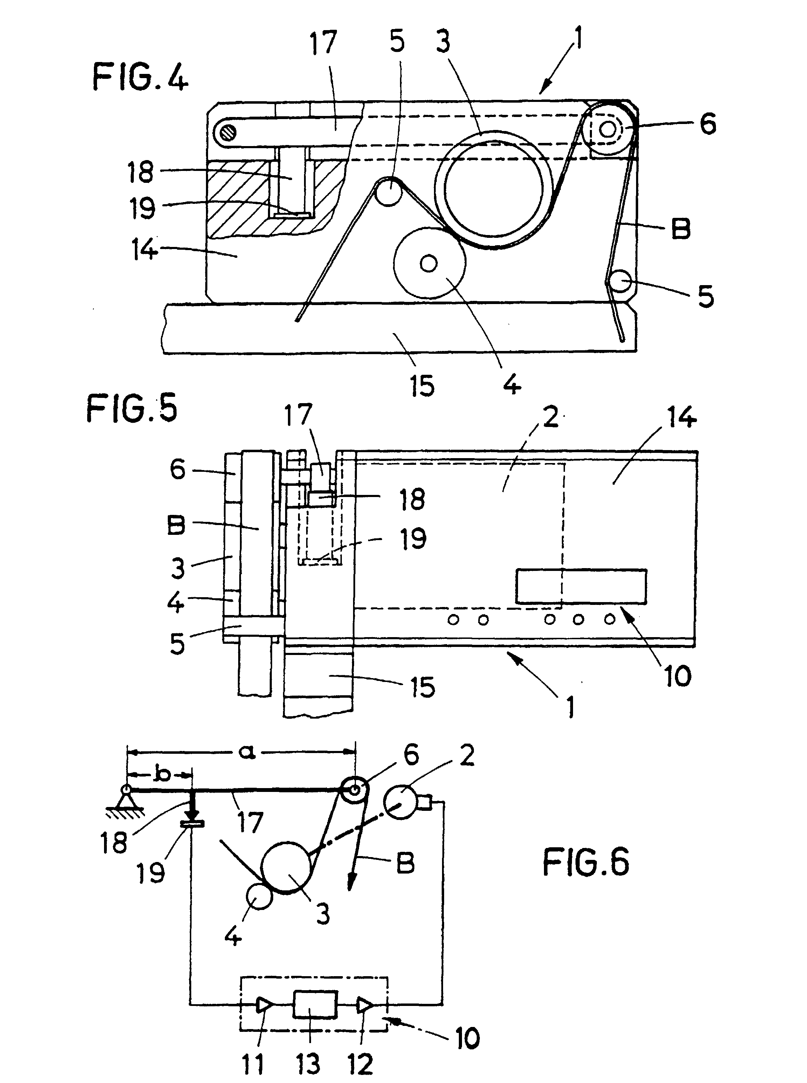

Gemäß dem Ausführungsbeispiel nach Fig. 4 bis 6 gibt es zur Umlenkrollenlagerung einen Hebel 17, an dessen Kraftarm a die Umlenkrolle 6 sitzt und dessen Lastarm b über einen Druckstempel 18 auf einen Drucksensor 19 einwirkt. Über den Drucksensor 19 werden nun die vom Bandzug abhängigen Druckspannungen als elektrische Signale wiederum in eine Steuerungseinrichtung 10 eingelesen, die den Schrittmotor 2 ansteuert. Diese Steuerungseinrichtung 10 ist mit der gemäß dem Ausführungsbeispiel nach Fig. 1 bis 3 vergleichbar, wodurch der Schrittmotor 2 und damit der Bandvorschub in Abhängigkeit von den Druckänderungen, also in Abhängigkeit vom jeweiligen Bandzug gesteuert wird und ebenfalls eine feinfühlige Regelung der Bandzuführung erfolgt.

## Patentansprüche

1. Vorrichtung (1) zum zugspannungsgeregelten Zuführen eines elastischen Bandes (B) zu einer Arbeitsmaschine, insbesondere Nähmaschine, mit einem Schrittmotor (2) für den Bandvorschub und mit einer Umlenkrolle (6) für die Zugspannungsmessung des Bandes (B), wobei die Reaktionskräfte der Umlenkrollenlagerung mittels eines elektromechanischen Wandlers erfaßt und als Regelgröße zur Schrittmotorsteuerung einer Steuerungseinrichtung (10) einlesbar sind, **dadurch gekennzeichnet, daß** die Umlenkrolle (6) am Kraftarm (a) eines beweglich abgestützten Hebels (7) lagert, dessen Lastarm (b) auf einen den Wandler bildenden Drucksensor (19) einwirkt, und daß zur Steuerung des Schrittmotors (2) in Abhängigkeit von den auftretenden Druckänderungen die Steuerungseinrichtung (10) mit einem die Drucksensorsignale verarbeitenden Rechner (13) in Verbindung steht.

2. Vorrichtung (1) zum zugspannungsgeregelten Zuführen eines elastischen Bandes (B) zu einer Arbeitsmaschine, insbesondere Nähmaschine, mit einem Schrittmotor (2) für den Bandvorschub und mit einer Umlenkrolle (6) für die Zugspannungsmessung des Bandes (B), wobei die Reaktionskräfte der Umlenkrollenlagerung mittels eines elektromechanischen Wandlers erfaßt und als Regelgröße zur Schrittmotorsteuerung einer Steuerungseinrichtung (10) einlesbar sind, **dadurch gekennzeichnet, daß** die Umlenkrolle (6) auf einem beweglich abgestützten, entgegengesetzt zur Reaktionskraftbelastung feder- oder gewichtsbelasteten Träger lagert, dem ein den Wandler bildender, auf eine Trägerbewegung ansprechender Weggeber (9) zugeordnet ist, und daß zur Steuerung des Schrittmotors (2) in Abhängigkeit von den auftretenden Trägerbewegungen die Steuerungseinrichtung (10) mit einem die Weggebersignale verarbeitenden Rechner (13) in Verbindung steht.

3. Vorrichtung nach Anspruch 1 oder 2, **dadurch gekennzeichnet, daß** die Steuerungseinrichtung (10), der Wandler und die Vorschubeinrichtung mit dem Schrittmotor (2), den zugehörenden Treib- und Umlenkrollen (3, 4, 5, 6) und den Lagerelementen in einem gemeinsamen Gehäuse (14) untergebracht sind.

4. Vorrichtung nach den Ansprüchen 2 und 3, **dadurch gekennzeichnet, daß** der Weggeber (9) einen dem Träger zugeordneten Permanentmagneten (91) und einen dem Gehäuse (14) zugeordneten Hall-Sensor (92) umfaßt.

5. Vorrichtung nach den Ansprüchen 2 und 3, **dadurch gekennzeichnet, daß** der Weggeber (9) einen Dehnmeßstreifen aufweist, der zwischen Widerlagern des Trägers und des Gehäuses (14) eingesetzt ist.

6. Vorrichtung nach einem der Ansprüche 2 bis 5, **dadurch gekennzeichnet, daß** der Träger aus einem um eine Parallelachse zur Umlenkrollenachse schwenkbar gelagerten Meßhebel (7) besteht.

7. Vorrichtung nach einem der Ansprüche 2 bis 6, **dadurch gekennzeichnet, daß** der Träger aus einem entlang einer zumindest annähernd in Reaktionskraftrichtung verlaufenden Führungsschiene verschiebbar geführten Meßschlitten besteht.

## Claims

1. An apparatus (1) for the tension-controlled feeding of an elastic band (B) to a machine, especially a sewing machine, with a stepper motor (2) for the band feed and with a deflection roller (6) for measuring the tension of the band (B), with the forces of reaction of the deflection roller bearing being detected by means of an electromechanical transducer and being readable into a control device (10) as a controlled variable for the stepper motor control, **characterized in that** the deflection roller (6) is held on the power arm (a) of a movably supported lever (7) whose work arm (b) acts upon a pressure sensor (19) forming the transducer, and that for controlling the stepper motor (2) depending on the occurring pressure changes the control device (10) is in connection with a computer (13) processing the pressure sensor signals.

2. An apparatus (1) for tension-controlled feeding of an elastic band (B) to a machine, especially a sewing machine, with a stepper motor (2) for the band feed and with a deflection roller (6) for measuring the tension of the band (B), with the forces of reaction of the deflection roller bearing being detected by means of an electromechanical transducer and being readable into a control device (10) as a controlled variable for the stepper motor control, **characterized in that** the deflection roller (6) is held on a movably supported carrier which is spring- or weight-loaded opposite to the load of the forces of reaction and to which a position encoder (9) is associated which forms the transducer and which responds to the movement of the carrier, and that for controlling the stepper motor (2) depending on the occurring carrier movements the control device (10) is in connection with a computer (13) processing the position encoder signals.

3. An apparatus as claimed in claim 1 or 2, **characterized in that** the control device (10), the transducer and the feeding device with the stepper motor (2), the associated driving and deflection rollers (3, 4, 5, 6) and the bearing elements are housed in a common housing (14).

4. An apparatus as claimed in claims 2 and 3, **characterized in that** the position encoder (9) comprises a permanent magnet (91) associated with the carrier and

5. An apparatus as claimed in claims 2 and 3, **characterized in that** the position encoder (9) comprises a foil strain gauge which is inserted between the abutments of the carrier and the housing (14).

6. An apparatus as claimed in one of the claims 2 to 5, **characterized in that** the carrier consists of a measuring lever (7) which is held in a swivellable way about an axis parallel to the deflection roller axis.

7. An apparatus as claimed in one of the claims 2 to 6, **characterized in that** the carrier consists of a measuring carriage which is held in a displaceable way along a guide rail extending at least approximately in the direction of the forces of reaction.

## Revendications

1. Dispositif (1) destiné à amener une bande élastique (B) régulée en tension vers une machine de travail, notamment une machine à coudre, avec un moteur pas à pas (2) pour l'avancement de la bande et avec une poulie de renvoi (6) pour mesurer la tension en traction de la bande (B), les forces de réaction du montage de la poulie de renvoi étant enregistrées au moyen d'un transducteur électromécanique et étant destinées à être lues en tant que grandeur de réglage pour la commande du moteur pas à pas d'un organe de commande (10), **caractérisé en ce que** la poulie de renvoi (6) est montée sur le bras de puissance (a) d'un levier (7) en appui mobile dont le bras de charge (b) agit sur un capteur de pression (19) faisant office de transducteur et que, pour commander le moteur pas à pas (2) en fonction des changements de pression, l'organe de commande (10) est relié à un ordinateur (13) traitant les signaux du capteur de pression.

2. Dispositif (1) destiné à amener une bande élastique (B) régulée en tension vers une machine de travail, notamment une machine à coudre, avec un moteur pas à pas (2) pour l'avancement de la bande et avec une poulie de renvoi (6) pour mesurer la tension en traction de la bande (B), les forces de réaction du montage de la poulie de renvoi étant enregistrées au moyen d'un transducteur électromécanique et étant destinées à être lues en tant que grandeur de réglage pour la commande du moteur pas à pas d'un dispositif de commande (10), **caractérisé en ce que** la poulie de renvoi (6) est montée sur un support en appui mobile qui est soumis à l'action d'un ressort ou d'un contrepoids s'opposant à la sollicitation de la force de réaction et auquel support est associé un encodeur (9) faisant office de transducteur qui est déclenché par un mouvement du support, et que, pour commander le moteur pas à pas (2) en fonction des mouvements effectués par le support, l'organe de commande (10) est relié à un ordinateur (13) traitant les signaux de l'encodeur.

3. Dispositif selon la revendication 1 ou 2, **caractérisé en ce que** l'organe de commande (10), le transducteur et le dispositif d'avancement sont logés avec le moteur pas à pas (2), les poulies d'entraînement et de renvoi (3, 4, 5, 6) associées et les paliers dans un boîtier (14) commun.

4. Dispositif selon les revendications 2 et 3, **caractérisé en ce que** l'encodeur (9) comporte un aimant permanent (91) associé au support et un capteur Hall (92) associé au boîtier (14) .

5. Dispositif selon les revendications 2 et 3, **caractérisé en ce que** l'encodeur (9) comporte une jauge de contrainte qui est insérée entre des butées du support et du boîtier (14).

6. Dispositif selon l'une quelconque des revendications 2 à 5, **caractérisé en ce que** le support est constitué d'un levier de mesure (7) monté pivotant autour d'un axe paral lèle à l' axe de la poulie de renvoi.

7. Dispositif selon l'une quelconque des revendications 2 à 6, **caractérisé en ce que** le support est constitué d'un chariot de mesure monté à coulissement le long d'un rail de guidage qui s'étend du moins approximativement dans la direction de la force de réaction.
